# EUROPÄISCHE PATENTSCHRIFT

(11) **EP 1 264 480 B1**
(45) Veröffentlichungstag und Bekanntmachung des Hinweises auf die Patenterteilung: **28.04.2004**
(21) Anmeldenummer: 00907400.6
(22) Anmeldetag: 10.03.2000
(51) Int. Cl.: H04N 7/16

(54) **VERFAHREN, KOMMUNIKATIONSSYSTEM UND EMPFANGSVORRICHTUNG FÜR DIE VERRECHNUNG VON ZUGRIFFSKONTROLLIERTEN PROGRAMMEN UND/ODER DATEN VON BROADCASTSENDERN**
METHOD, COMMUNICATION SYSTEM AND RECEIVER DEVICE FOR THE BILLING OF ACCESS CONTROLLED PROGRAMMES AND/OR DATA FROM BROADCAST TRANSMITTERS
PROCEDE, SYSTEME DE COMMUNICATION, ET DISPOSITIF DE RECEPTION POUR LA FACTURATION DE PROGRAMMES ET/OU DE DONNEES A ACCES CONTROLE D'EMETTEURS DE DIFFUSION

(43) Veröffentlichungstag der Anmeldung: 11.12.2002
(73) Patentinhaber: RITTER, Rudolf, 3052 Zollikofen (CH)
(72) Erfinder: RITTER, Rudolf, CH-3052 Zollikofen (CH); TRINCHAN, Claude, CH-3132 Belp (CH)
(74) Vertreter: Wenger, Joel-Théophile
(86) Internationale Anmeldenummer: PCT/CH2000/000142
(87) Internationale Veröffentlichungsnummer: WO 2001/067761

(56) Entgegenhaltungen:
- EP-A- 0 128 555
- EP-A- 0 314 203
- EP-A- 0 789 337
- DE-A- 19 846 452
- US-A- 4 710 955
- US-A- 5 619 247
- PATENT ABSTRACTS OF JAPAN vol. 010, no. 289 (E-442), 2. Oktober 1986 (1986-10-02) & JP 61 108273 A (SONY CORP), 26. Mai 1986 (1986-05-26)

## Beschreibung

Die vorliegende Erfindung betrifft ein Verfahren, ein Kommunikationssystem und eine Empfangsvorrichtung für die Verrechnung von zugriffskontrollierten Programmen und/oder Daten, die verschlüsselt und unidirektional von einem Broadcastsender verbreitet werden. Insbesondere betrifft die vorliegende Erfindung ein Verfahren, ein Kommunikationssystem und eine Empfangsvorrichtung für die Verrechnung von zugriffskontrollierten Programmen und/oder Daten gemäss den betreffenden Oberbegriffen der unabhängigen Ansprüche 1, 7 und 13.

Weltweit werden zur Zeit Broadcastsysteme mit Broadcastsendem und Broadcastempfängem aufgebaut, in denen digitale Audio-, respektive Video-Programme (Fernsehprogramme), und digitale Daten, beispielsweise Daten für die Ausführung von Datendiensten oder programmbegleitende Daten mit Bezug zu den betreffenden Programmen (Program Associated Data, PAD), von den Broadcastsendem unidirektional verbreitet, beispielsweise mittels von terrestrischen oder satellitenbasierten Sendern ausgestrahlten Radiowellen oder über Broadcastkabelnetze, und von entsprechenden Broadcastempfängem empfangen werden. Solche Broadcastsysteme sind beispielsweise unter der Bezeichnung Digital Audio Broadcasting (DAB), respektive Digital Video Broadcasting (DVB) bekannt Mittels dieser Broadcastsysteme können insbesondere auch zugriffskontrollierte Programme und/oder Daten verbreitet werden. Zugriffskontrollierte Programme und/oder Daten werden verschlüsselt (scrambled) verbreitet und können nur von berechtigten Benutzern mittels Broadcastempfängem empfangen und entschlüsselt (descrambled) werden. Die unidirektionale Verbreitungseigenschaft dieser Broadcastsysteme hat allerdings den Nachteil, dass, insbesondere bei der Übertragung mittels Radiowellen, ein Rückkanal von den Broadcastempfängem zu den Broadcastsendem, respektive zu deren Betreibern, fehlt Bedingt durch diesen fehlenden Rückkanal sind die Möglichkeiten für die Verrechnung von zugriffskontrollierten Programmen und/oder Daten beschränkt. Im allgemeinen werden zugriffskontrollierte Programme und/oder Daten in diesen Broadcastsystemen so verrechnet, dass interessierten Benutzem von den Anbietem, beispielsweise die Betreiber der Broadcastsender, Abonnemente für verschiedene Programme und/oder Datendienste gegen Abonnementsgebühren ausgestellt werden, beispielsweise Abonnemente für spezifische Themen oder Programme, die während einer Abonnementsdauer bezogen werden können. Entsprechend dem im voraus oder nachträglich bezahlten Abonnement werden dem betreffenden Benutzer Berechtigungsdaten für die abonnierten Dienste in den Broadcastempfänger geladen, beispielsweise durch direkte Adressierung über den Broadcastkanal oder mittels einem Datenträger. Diese Art der Verrechnung per Abonnement ist für die Benutzer insbesondere dann unvorteilhaft, wenn sie zugriffskontrollierte Programme und/oder Daten von mehreren Anbietern, respektive von mehreren Broadcastsendem, beziehen möchten, da sie Abonnemente mit mehreren Anbietern abschliessen müssen. Die Verrechnung per Abonnement ist für die Benutzer auch deshalb unvorteilhaft, weil sie nicht spontan zugriffskontrollierte Programme und/oder Daten beziehen können, für die sie kein Abonnement gelöst haben. Ein weiterer Nachteil der Verrechnung per Abonnement liegt darin, dass die Anbieter, respektive die Betreiber der Broadcastsender, keine direkte Information darüber erhalten, welche abonnierten Dienste durch die Benutzer auch tatsächlich bezogen wurden. Aus der Sicht der Benutzer scheint die Verrechnung per Abonnement zudem keine faire Verrechnungsmethode zu sein, da sie für Abonnemente unabhängig davon bezahlen müssen, ob sie die abonnierten Dienste beziehen oder nicht. Insbesondere für Betreiber von kleineren Broadcastsendem, respektive von kleineren Anbietern von zugriffskontrollierten Programmen und/oder Daten, ist zudem der Aufwand für die Verwaltung solcher Abonnemente und für die Verrechnung solcher Dienste zu aufwendig.

In der Patentanmeldung EP 314203 A2 wird ein System für die Entschlüsselung von Fernsehsignalen in einem Abonnentenfernsehnetzwerk beschrieben. Gemäss EP 314203 A2 befindet sich im Endgerät eines Abonnenten ein Autorisierungsprozessor, der ein Kreditregister umfasst, in welchem entsprechend einem über das Femsehnetzwerk empfangenem Kreditsignal ein Kreditwert gespeichert ist. Gemäss EP 314203 A2 werden in einem Schuldenregister entsprechend einem über das Fernsehnetz empfangenen Programmkostensignal die für den Abonnenten entstandenen Kosten summiert. Gemäss EP 314203 A2 werden durch eine Vergleichseinheit die entstandenen Kosten und der Kreditwert verglichen, um zu bestimmen, ob der betreffende Abonnent des Femsehnetzwerkes genügend Kredit für die Entschlüsselung von verschlüsselten Fernsehsignalen hat. Gemäss D1 wird der Betrag der entstandenen Kosten zudem Ober das Femsehnetzwerk an dessen Betreiber übertragen.

Es ist eine Aufgabe der vorliegenden Erfindung, ein neues und besseres Verfahren, ein neues und besseres Kommunikationssystem sowie eine neue und bessere Empfangsvorrichtung vorzuschlagen, die für die Verrechnung von zugriffskontrollierten Programmen und/oder Daten geeignet sind, die verschlüsselt und unidirektional von einem Broadcastsender verbreitet werden, und die insbesondere nicht die oben angeführten Nachteile aufweisen.

Gemäss der vorliegenden Erfindung werden diese Ziele insbesondere durch die Elemente der unabhängigen Ansprüche erreicht. Weitere vorteilhafte Ausführungsformen gehen ausserdem aus den abhängigen Ansprüchen und der Beschreibung hervor.

Insbesondere werden diese Ziele durch die Erfindung dadurch erreicht, dass für die Verrechnung von zugriffskontrollierten Programmen und/oder Daten, die verschlüsseit und unidirektional von einem Broadcastsender verbreitet werden, ein Geldbetragswert in einem Datenspeicher einer mobilen Empfangsvorrichtung gespeichert wird, dass in der mobilen Empfangsvorrichtung basierend auf empfangenen Kostendaten der zugriffskontrollierten Programme und/oder Daten Kosten für den Zugriff auf die zugriffskontrollierten Programme und/oder Daten bestimmt werden, dass die Entschlüsselung der zugriffskontrollierten Programme und/oder Daten in der mobilen Empfangsvorrichtung verhindert wird, wenn die bestimmten Kosten grösser als der gespeicherte Geldbetragswert sind, dass die Kosten für den Zugriff auf die unverschlüsselten zugriffskontrollierten Programme und/oder Daten vom gespeicherten Geldbetragswert subtrahiert werden, dass in der mobilen Empfangsvorrichtung Verrechnungsbelege, die Kostenbeträge und/oder Kostenparameter für die Berechnung der Kostenbetrage der Kosten für den Zugriff auf die unverschlüsselten zugriffskontrollierten Programme und/oder Daten sowie eine Anbieteridentifizierung des Anbieters dieser zugriffskontrollierten Programme und/oder Daten umfassen, generiert und in einem Datenspeicher der mobilen Empfangsvorrichtung gespeichert werden, dass die generierten Verrechnungsbelege über ein Mobilfunknetz an eine Verrechnungszentrale (3) übermittelt werden, und dass die Verrechnungszentrale entsprechend den empfangenen Verrechnungsbelegen den betreffenden Anbietem der zugriffskontrollierten Programme und/oder Daten Gutschriften gutschreibt. Der Geldbetragswert kann je nach Ausführungsvariante ein vorausbezahlter Geldbetragswert sein oder er kann eine Kreditlimite repräsentieren, die nicht überschritten werden darf. Die Programme umfassen beispielsweise digitale Audio- und/oder Videoprogramme. Die Kostenparameter sind beispielsweise Start- und Endzeit oder Zeitdauer sowie die Kosten pro Zeiteinheit der bezogenen Programme und/oder Daten. Das Mobilfunknetz ist zum Beispiel ein GSM- (Global System for Mobile Communication) oder UMTS-Netz (Universal Mobile Telephone System) oder ein anderes, beispielsweise satellitenbasiertes Mobilfunknetz.

Der Vorteil des gespeicherten Geldbetragswerts und der laufenden Subtrahierung der Kosten für den Zugriff auf die zugriffskontrollierten Programme und/oder Daten von diesem Geldbetragswert liegt darin, dass ein Benutzer spontan zugriffskontrollierte Programme und/oder Daten beziehen kann, ohne dass er dafür vorgängig ein Abonnement lösen muss, wobei jedoch der Bezug von zugriffskontrollierten Programmen und/oder Daten auf den vorausbezahlten Geldbetragswert, respektive auf die durch den Geldbetragswert repräsentierte Kreditlimite, beschränkt bleibt.

Der Vorteil der Generierung und Speicherung von Verrechnungsbelegen besteht darin, dass dadurch eine nachträgliche Buchführung und Verrechnung der Kosten für den Zugriff auf die zugriffskontrollierten Programme und/oder Daten ermöglicht wird.

Der Vorteil der Übermittlung der Verrechnungsbelege an eine Verrechnungszentrale und die Zuweisung von Gutschriften an die Anbieter gemäss den Angaben in den Verrechnungsbelegen durch diese Verrechnungszentrale besteht darin, dass dadurch der spontane Bezug von zugriffskontrollierten Programmen und/oder Daten von mehreren Anbietern, respektive verschiedenen Broadcastsendern ermöglicht wird, ohne dass dafür durch die Benutzer Abonnemente mit all diesen Anbietern abgeschlossen werden müssen. Basierend auf den übermittelten Verrechnungsbelegen können den Anbietem zudem Informationen Ober die von den Benutzern tatsächlich bezogenen Programme und/oder Daten zur Verfügung gestellt werden. Für die Anbieter, respektive Betreiber der Broadcastsender, bedeutet die Verrechnung Ober eine Verrechnungszentrale zudem eine wesentliche Entlastung, da sie sich weder mit der Verwaltung von Abonnementen noch mit der detaillierten Verrechnung der Kosten beschäftigen müssen.

Der Vorteil der Übermittlung der Verrechnungsbelege Ober das Mobilfunknetz an die Verrechnungszentrale besteht darin, dass die Übermittlung und die nachfolgende, auf diesen Verrechnungsbelegen basierende Gutschrift von Beträgen an die verschiedenen Anbieter ausgeführt werden kann, ohne dass von den Benutzem Datenträger, insbesondere Chipkarten, aus den Empfangsvorrichtungen entnommen und in ein Datenterminal eingeführt werden müssen. Die Übermittlung der Verrechnungsbelege an die Verrechnungszentrale kann in dieser Ausführungsvariante automatisch ohne Initiative oder Zutun der Benutzer durchgeführt werden.

Vorzugsweise werden die Verrechnungsbelege in der Empfangsvorrichtung elektronisch signiert.

In einer Ausführungsvariante werden der Geldbetragswert und/oder die Verrechnungsbelege in einem Datenspeicher gespeichert, der in einer Chipkarte integriert ist, die aus der mobilen Empfangsvorrichtung entfernbar ist Der Vorteil der Speicherung des Geldbetragswerts und/oder der Verrechnungsbelege in einem aus der Empfangsvorrichtung entfernbaren Datenspeicher besteht einerseits darin, dass diese Daten, ohne Zuhilfenahme von zusätzlichen Kommunikationsmitteln in der Empfangsvorrichtung, externen Datenverarbeitungsmitteln ausserhalb der Empfangsvorrichtung verfügbar gemacht werden können, und andererseits darin, dass mehrere Benutzer dieselbe Empfangsvorrichtung benutzerspezifisch benutzen können, indem sie ihren eigenen Datenspeicher in die Empfangsvorrichtung einfügen, oder dass ein Benutzer verschiedene Datenträger für unterschiedliche Zwecke, beispielsweise private und geschäftliche Verwendung oder für verschiedene Themen, in die Empfangsvorrichtung einfügen kann.

in einer Ausführungsvariante wird die Chipkarte aus der Empfangs-Vorrichtung entnommen und in ein externes Datenterminal ausserhalb der Empfangsvorrichtung eingeführt, wobei der Geldbetragswert durch das Datenterminal mit einem Nachladebetrag nach- oder aufgeladen wird. Der Nachladebetrag entspricht beispielsweise einem vom Benutzer festgesetzten vorausbezahlten Geldbetrag, der dem Benutzer beispielsweise auf einem Bankkonto oder auf einem Kreditkartenkonto (Kreditkartennummer) belastet wird, oder der durch den Benutzer beim Datenterminal bar bezahlt wird. Der Vorteil dieser Ausführungsvariante besteht darin, dass sie auf der Grundlage von zahlreichen bereits vorhandenen vemetzten Datenterminals, beispielsweise Bankautomaten oder Billettautomaten, realisiert werden kann.

In einer Ausführungsvariante wird der Geldbetragswert über das Mobilfunknetz mit einem Nachladebetrag nach- oder aufgeladen.

In einer Ausführungsvariante wird durch die Empfangsvorrichtung ein Nachladebetrag über eine Schnittstelle, beispielsweise eine kontaktlose Geräteschnittstelle, zum Beispiel eine Infrarot- oder eine Funkschnittstelle, von einem externen Datenterminal ausserhalb der Empfangsvorrichtung entgegengenommen, und der Geldbetragswert wird mit dem entgegengenommenen Nachladebetrag nach- oder aufgeladen.

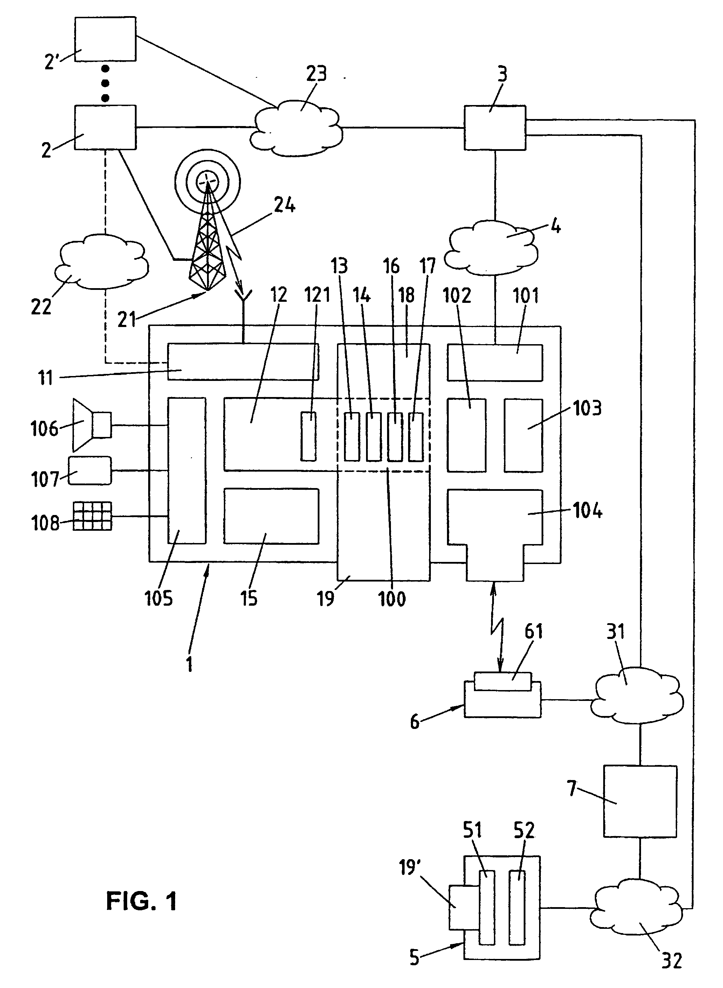

Nachfolgend wird eine Ausführung der vorliegenden Erfindung anhand eines Beispiels beschrieben. Das Beispiel der Ausführung wird durch die einzige beigelegte Figur 1 illustriert, die
ein schematisches Blockdiagramm eines Kommunikationssystems zeigt, in welchem ein Broadcastsender, eine Empfangsvorrichtung sowie mit einer Verrechnungszentrale vemetzte Datenterminals illustriert werden.

In der Figur 1 beziehen sich die Referenznummern 2 und 2' jeweils auf einen Broadcastsender, der Programme und/oder Daten unidirektional verbreitet, beispielsweise mittels Radiowellen von einer terrestrischen oder satellitenbasierten Broadcastsendeantenne 21 über eine Luftschnittstelle 24, oder über Broadcastkabelnetze 22. Mit den Referenznummern 2 und 2' werden auch die Anbieter dieser Programme und/oder Daten bezeichnet, beispielsweise digitale Audio-, respektive Video-Programme (Fernsehprogramme), und digitale Daten, beispielsweise Daten für die Ausführung von Datendiensten oder programmbegleitende Daten mit Bezug zu den betreffenden Programmen (Program Associated Data, PAD). Allerdings soll hier zur besseren Klarheit angefügt werden, dass auch mehrere verschiedene Anbieter ihre Programme und/oder Daten über einen gemeinsamen Broadcastsender 2, 2' verbreiten können.

Die Referenznummer 1 bezieht sich auf eine Empfangsvorrichtung mit einem Broadcastempfänger 11, mittels welchem die von den Broadcastsendem 2, 2' verbreiteten Programme und/oder Daten über Broadcastkanäle empfangen werden können, beispielsweise über ein Broadcastkabelnetz 22 oder mittels einer Empfangsantenne als Radiowellen über eine Luftschnittstelle 24.

Broadcastsysteme mit solchen Broadcastsendem und Broadcastempfängern sind beispielsweise unter der Bezeichnung Digital Audio Broadcasting (DAB), respektive Digital Video Broadcasting (DVB) bekannt.

Vom European Telecommunications Standards Institute (ETSI), F-06921 Sophia Antipolis Cedex, France, wurde für das Digital Audio Broadcasting (DAB) System, das für die Übermittlung von hochqualitativen digitalen Audio-Programmen und/oder Datendiensten für den Empfang mittels mobilen, tragbaren und festinstallierten Endgeräten von terrestrischen oder satellitenbasierten Sendern 2, 2' oder von Broadcastkabelnetzen 22 entwickelt wurde, der Standard ETS 300 401, "Radio broadcasting systems; Digital Audio Broadcasting (DAB) to mobile, portable and fixed receivers", definiert. Der Inhalt des diesbezüglichen Dokuments ETS 300 401, das im Mai 1997 vom ETSI in der zweiten Ausgabe veröffentlicht wurde, sowie der Inhalt des Standard-Dokuments ETS 300 174, "Network Aspects (NA); Digital coding of component television signals for contribution quality applications in the range 34-45 Mbit/s", das im November 1992 vom ETSI veröffentlicht wurde, werden hiermit per Referenz in diesen Text aufgenommen.

In den oben genannten ETSI-Standards wird auch ein Fast Information Channel (FIC) definiert, mittels welchem den Broadcastempfängern 11 ein schneller Zugriff auf Informationen ermöglicht wird. Über den FIC-Kanal werden beispielsweise Multiplex Configuration Information (MCI) aber auch Dienstinformationen und Daten für Datendienste übertragen.

Um den Zugriff auf einzelne oder mehrere Dienste oder Dienstkomponenten (im Zusammenhang mit DAB sind diese Dienste und Dienstkomponenten Audio-Programme und/oder Daten(-dienste), im Zusammenhang mit DVB Video-, respektive Fernsehprogramme, und/oder Daten(-dienste)) für berechtigte Benutzer zu begrenzen, werden in den oben genannten ETSI-Standards Mechanismen für zugriffskontrollierte Programme und/oder Daten(-dienste), der sogenannte Conditional Access, definiert. Insbesondere werden in den oben genannten ETSI-Standards Scrambling/Descrambling-Prozeduren (Verschlüsselung/Entschlüsselung), Parameter für die Signalisierung und Synchronisation des Conditional Access sowie Mechanismen für die Kontrolle und Verteilung von Berechtigungen (Berechtigungsdaten für Benutzer) durch die Übermittlung von sogenannten ECM-Meldungen (Entitlement Checking Messages) und EMM-Meldungen (Entitlement Management Messages) über die Broadcastkanäle (Broadcastkabelnetz 22 oder Luftschnittstelle 24) beschrieben.

Gemäss den oben genannten ETSI-Standards wird für jede der über die Broadcastkanäle 22, 24 ausgesandten Dienstkomponenten ein Conditional Access Flag und/oder ein Conditional Access Identifier benützt, um dem Broadcastempfänger 11 anzuzeigen, ob die betreffende Dienstkomponente Conditional Access Mechanismen verwendet oder nicht, und gegebenenfalls, welche Art von Mechanismen verwendet werden. Für Dienstkomponenten, die in einem Controlled Access Modus sind und die in diesem Text als zugriffskontrollierte Programme und/oder Daten bezeichnet werden, werden die Daten der betreffenden Dienstkomponente (die Programme und/oder Daten betreffen kann) mit einem Control Word verschlüsselt, wobei dieses Control Word regelmässig geändert und seinerseits durch einen Session Key (Schlüssel) verschlüsselt in den ECM-Meldungen an die Broadcastempfänger 11 übertragen wird.

Durch den Conditional Access Identifier wird gemäss den oben genannten ETSI-Standards das für alle Dienstkomponenten eines Dienstes verwendete Zugriffskontrollmodul 12, das sogenannte Access Control System, identifiziert, welches Access Control System die vom Broadcastsender 2, 2' übermittelten ECM- und EMM-Meldungen interpretieren und verarbeiten kann.

Der für die Verschlüsselung der Control Words verwendete Session Key (Schlüssel) ist gemäss den oben genannten ETSI-Standards im Access Control System als geheime Information gespeichert. Session Keys (Schlüssel) können in EMM-Meldungen an die Broadcastempfänger 11 übertragen werden, wobei sie für die Übertragung ihrerseits durch einen Distribution Key verschlüsselt sind.

Gemäss den oben genannten ETSI-Standards werden in den EMM-Meldungen Berechtigungen (Berechtigungsdaten) an die Broadcastempfänger 11 übertragen, wobei verschiedene Arten von Berechtigungen definiert sind, die verschiedenen Abonnementsarten entsprechen: Abonnemente für ein Thema, eine Stufe oder eine Klasse, Vorbuchung mit Bezahlung pro Programm, oder spontane Bezahlung pro Programm, pro Dienst oder pro Zeit. Gemäss den oben genannten ETSI-Standards können die EMM-Meldungen an einen spezifischen, durch eine eindeutige Kundenadresse identifizierten Kunden (Benutzer), an eine kleine, durch eine Gruppenadresse identifizierte Gruppe von Kunden (Benutzern), an eine grosse, durch eine Kollektivadresse identifizierte Gruppe von Kunden (Benutzern) oder an sämtliche Kunden übermittelt werden. Da der Inhalt der EMM-Meldungen, insbesondere die Berechtigungen, nicht in Echtzeit an die Broadcastempfänger 11 übermittelt werden muss, kann dieser anstatt mittels EMM-Meidungen auch auf anderem Weg, beispielsweise gespeichert auf einem Datenträger, insbesondere eine Chipkarte 19, an den Broadcastempfänger 11 übertragen werden.

Gemäss den oben genannten ETSI-Standards sind die Kundenadressen im Access Control System (Zugriffskontrollmodul 12) gespeichert und werden vom Access Control System an das für den Empfang von EMM-Meldungen zuständige EMM-Empfangsmodul (nicht dargestellt) des Broadcastempfängers 11 übertragen, so dass dieses EMM-Empfangsmodul nur solche EMM-Meldungen an das Access Control System weiterleitet, die eine Kundenadresse enthalten, die mit einer der vom Access Control System erhaltenen Kundenadressen übereinstimmen.

Um das Access Control System nicht unnötig mit Meldungen zu überlasten, umfasst der Broadcastempfänger 11 Hard- oder Softwarefilter, die nur diejenigen Meldungen an das Access Control System weiterleiten, die durch das Access Control System interpretiert und verarbeitet werden können und müssen, beispielsweise werden die Meldungen wie obenstehend erwähnt auf Grund der Kundenadresse gefiltert und es werden wiederholt übertragene Meldungen gefiltert.

Gemäss den oben genannten ETSI-Standards werden in den ECM-Meldungen neben geheimen Codes für die Entschlüsselung (descrambling) die Bedingungen (Zugriffsbedingungsdaten) an die Broadcastempfänger 11 übertragen, die zu erfüllen sind, um Zugriff auf Conditional Access Dienste zu erhalten. Die ECM-Meldungen enthalten sämtliche Informationen, die die Bedingungen für den Zugriff auf einen Dienst, beispielsweise ein Audio-Programm oder ein Datendienst spezifizieren. Es können folglich Kunden mit unterschiedlichen Berechtigungen auf einen Dienst zugreifen. Gemäss den oben genannten ETSI-Standards können, je nach verfügbarem Dienstzugriff, folgende Parameter in den ECM-Meldungen enthalten sein:
- Program Provider Identifier, identifiziert den Anbieter, der die ECM-Meldung generiert hat.
- Broadcast Datum und Programm Thema/Stufe, wenn das Programm, das heisst der Dienst, im Abonnement für ein(e) Thema/Stufe verfügbar ist.
- Broadcast Datum und Programm Klasse, wenn das Programm, das heisst der Dienst, im Abonnement per Link verfügbar ist.
- Programmnummer, wenn das Programm, das heisst der Dienst, unter Vorbuchung und Zahlung pro Programm verfügbar ist.
- Programmnummer und Programmkosten, wenn das Programm, das heisst der Dienst, für spontane Bezahlung pro Programm verfügbar ist.
- Programmnummer und Kosten pro Zeiteinheit des Programms, wenn das Programm, das heisst der Dienst, für spontane Bezahlung pro Zeiteinheit pro Programm verfügbar ist.

Wenn die Berechtigungen den Bedingungen genügen, die zu erfüllen sind um Zugriff auf Conditional Access Dienste zu erhalten, kann der Session Key (Schlüssel) des Access Control Systems verwendet werden, um das Control Word zu entschlüsseln. Mit dem Control Word können dann die Daten der betreffenden Dienstkomponenten entschlüsselt werden.

Gemäss der vorliegenden Erfindung wird in einem für Benutzer nicht beschreibbaren Datenspeicher 16 der Empfangsvorrichtung 1 ein Geldbetragswert gespeichert, der einem vorausbezahlten Geldbetrag oder einer Kreditlimite entspricht. Der Datenspeicher 16 ist beispielsweise fest in der Empfangsvorrichtung 1 installiert oder er befindet sich auf einem Datenträger der Empfangsvorrichtung 1, beispielsweise eine Chipkarte 19, welcher Datenträger vom Benutzer aus der Empfangsvorrichtung 1 entfernt werden kann. Der Geldbetragswert wird beispielsweise über die Broadcastkanäle 22, 24 oder über ein Kommunikationsnetz 4, beispielsweise ein Mobilfunknetz, zum Beispiel ein GSM- oder UMTS-Netz oder ein anderes, beispielsweise satellitenbasiertes Mobilfunknetz, oder ein Festnetz, zum Beispiel ein ISDN-Netz, das öffentliche geschaltete Telefonnetz, oder ein IP-Netz (insbesondere das Internet), in den Datenspeicher 16 geladen. Falls sich der Speicher 16 auf einer Chipkarte 19 befindet, kann der Geldbetragswert mittels einer Kartenlese-/Schreibvorrichtung 51 geladen werden, in die die Chipkarte 19 eingeführt wird.

Wie oben angeführt wurde, können in den ECM-Meldungen vom Broadcastsender 2, 2' auch Kostendaten an die Broadcastempfänger 11 übermittelt werden, nämlich Programmkosten für zugriffskontrollierte Programme und/oder Daten, die für die spontane Bezahlung pro Dienst verfügbar sind, und/oder Kosten pro Zeiteinheit für zugriffskontrollierte Programme und/oder Daten, die für die spontane Bezahlung pro Zeiteinheit und pro Dienst verfügbar sind. Das Kostenerfassungsmodul 18 berechnet basierend auf diesen Kostendaten die Kosten, die für den Zugriff auf die betreffenden zugriffskontrollierten Programme und/oder Daten zu bezahlen sind. Das Kostenerfassungsmodul 18 ist beispielsweise ein programmiertes Softwaremodul, das auf einem Prozessor ausgeführt wird, oder es ist hardwaremässig ausgeführt.

Wie in der Figur 1 schematisch illustriert ist, ist das Zugriffskontrollmodul 12 (Access Control System) mit einem zusätzlichen Kreditkontrollmodul 121 ausgestattet. Das Kreditkontrollmodul 121 verhindert die Entschlüsselung von zutrittskontrollierten Programmen und/oder Daten, wenn die vom Kostenerfassungsmodul 18 berechneten zu bezahlenden Kosten grösser sind als der im Datenspeicher 16 gespeicherte Geldbetragswert. Die Vergleichsoperation betreffend die berechneten Kosten und den gespeicherten Geldbetragswert kann dabei durch das Kreditkontrollmodul 121 durchgeführt werden oder sie kann zur Entlastung des Zugriffskontrollmoduls 12 ausserhalb des Kreditkontrollmoduls 121, beispielsweise hardwaremässig, ausgeführt werden, so dass das Kreditkontrollmodul 121 beispielsweise auf die Funktion der Überprüfung des Resultats der Vergleichsoperation reduziert werden kann. Funktionen und Operationen, des Zugriffskontrollmoduls 12 können beispielsweise parallel (gleichzeitig) zu den Funktionen und Operationen des Kostenerfassungsmoduls 18 ausgeführt werden. Zum Beispiel kann das Kostenerfassungsmodul 18 auf Grund der in den ECM-Meldungen empfangenen Kostendaten die Kosten für den Zugriff auf die betreffenden zugriffskontrollierten Programme und/oder Daten bestimmen und das Resultat der Vergleichsoperation (beispielsweise "1" für ausreichender Kredit, "0" für kein ausreichender Kredit) in einem für das Zugriffskontrollmodul 12 zugänglichen Speicherplatz abspeichem, während das Zugriffskontrollmodul 12 auf Grund der in den ECM-Meldungen empfangenen Zugriffsbedingungsdaten und den in der Empfangsvorrichtung 1 gespeicherten Berechtigungsdaten 14 die Berechtigung des Benutzers für den Zugriff auf die betreffenden zugriffskontrollierten Programme und/oder Daten bestimmt und danach, bei gegebener Berechtigung, das durch das Kostenerfassungsmodul 18 bestimmte Resultat der Vergleichsoperation kontrolliert. Falls durch die Vergleichsoperation bestimmt wurde, dass der Kredit des Benutzers ausreicht, wird vom Zugriffskontrollmodul 12 der in der Empfangsvorrichtung 1 gespeicherte Schlüssel 13 (Session Key) für die Entschlüsselung des in den ECM-Meldungen empfangenen Control Words freigegeben und dadurch die Entschlüsselung der verschlüsselten zugriffskontrollierten Programme und/oder Daten durch das Entschlüsselungsmodul 15 ermöglicht. Falls durch die Vergleichsoperation bestimmt wurde, dass der Kredit des Benutzers nicht ausreicht, wird vom Zugriffskontrollmodul 12 der in der Empfangsvorrichtung 1 gespeicherte Schlüssel 13 (Session Key) für die Entschlüsselung des in den ECM-Meldungen empfangenen Control Words nicht freigegeben und dadurch die Entschlüsselung der verschlüsselten zugriffskontrollierten Programme und/oder Daten durch das Entschlüsselungsmodul 15 verhindert.

Um verschiedene Zugriffskontrollmodule 12 mit oder ohne zusätzlichem Kreditkontrollmodul 121 zu unterstützen, können beispielsweise verschiedene Conditional Access Identifiers definiert und verwendet werden.

In einer Variante kann die Kreditkontrolle so ausgeführt werden, dass Kreditbedingungswerte, die einen Mindestgeldbetragswert für den Zugriff auf zugriffskontrollierte Programme und/oder Daten spezifizieren, in den ECM-Meldungen als Zugriffsbedingungsdaten an die Empfangsvorrichtung 1 übertragen werden, dass ein Berechtigungsbetragswert, der einem vorausbezahlten Geldbetragswert oder einer Kreditlimite entspricht, in der Empfangsvorrichtung 1 als Teil der Berechtigungsdaten gespeichert ist, und dass das Kreditkontrollmodul 121 empfangene Kreditbedingungswerte mit gespeicherten Berechtigungsbetragswerten vergleicht, bevor der Zugriff auf den Schlüssel (Session Key) zur Entschlüsselung von zugriffskontrollierten Programmen und/oder Daten freigegeben wird.

Als weitere Funktion des Kostenerfassungsmoduls 18 werden die Kosten für den erfolgten Zugriff auf die unverschlüsselten zugriffskontrollierten Programme und/oder Daten vom im Speicher 16 gespeicherten Gedibetragswert subtrahiert. Zudem werden vom Kostenerfassungsmodul 18 Verrechnungsbelege generiert, für Authentifizierungszwecke elektronisch signiert und in einem Stack 17 in der Empfangsvorrichtung 1 gespeichert. Die elektronische Signatur authentifiziert beispielsweise das Kostenerfassungsmodul 18 und/oder die Empfangsvorrichtung 1 und/oder den betreffenden Benutzer der Empfangsvorrichtung 1 als authentische(n) Produzent/Quelle der Verrechnungsbelege. Die elektronische Signatur basiert beispielsweise auf einem Zertifikat, das durch eine Zertifizierungseinheit, beispielsweise eine Trusted Third Party (TTP), ausgegeben wird. Die Verrechnungsbelege enthalten die Kostenbeträge und/oder die Kostenparameter für die Berechnung der Kostenbeträge der Kosten für den Zugriff auf die unverschlüsselten zugriffskontrollierten Programme und/oder Daten. Die Kostenparameter sind beispielsweise Start- und Endzeit oder Zeitdauer sowie die Kosten pro Zeiteinheit der bezogenen Programme und/oder Daten. Die Verrechnungsbelege können auch Angaben über die betreffenden zugriffskontrollierten Programme und/oder Daten enthalten, beispielsweise eine Programmnummer, Angaben über das Programmthema, die Programmstufe und/oder die Programmklasse und/oder eine Währungsangabe. Im Zusammenhang mit der Währungsangabe soll zudem erwähnt werden, dass nicht nur verschiedene Währungen für die Geldbetragswerte unterstützt werden können, sondern dass für die Geldbetragswerte auch Punkte gemäss einem definierten Punktesystem, beispielsweise eine Loyalitätspunktesystem, verwendet und unterstützt werden können, wobei diese Punkte wie eine Währung behandelt werden. Die Verrechnungsbelege enthalten zudem eine Anbieteridentifizierung des Anbieters und/oder des Broadcastsenders der betreffenden zugriffskontrollierten Programme und/oder Daten. Die Verrechnungsbelege enthalten in einer Variante auch eine Benutzeridentifizierung des Benutzers der Empfangsvorrichtung 1, welche Benutzeridentifizierung beispielsweise der oben erwähnten eindeutigen Kundenadresse entspricht oder welche Benutzeridentifizierung einer anderen Benutzeridentifizierung für andere Systeme entspricht, beispielsweise eine International Mobile Subscriber Identity (IMSI), die zur Identifizierung in einem Mobilfunknetz dient, und welche Benutzeridentifizierung beispielsweise in der Chipkarte 19, beispielsweise eine SIM-Karte (Subscriber Identification Module), gespeichert ist.

Wie später beschrieben wird, können die generierten Verrechnungsbelege über verschiedene Datenkanäle, beispielsweise direkt über ein Kommunikationsnetz 4, über eine Schnittstelle 104-61 an ein Datenterminal 6, und vom Datenterminal 6 über ein Kommunikationsnetz 31, oder mittels einer in ein Datenterminal 5 eingeführten Chipkarte 19' über dieses Datenterminal 5 und ein Kommunikationsnetz 32 an eine Verrechnungszentrale 3 übertragen werden.

In der Figur 1 sind verschiedene Datenelemente, respektive die dafür vorgesehenen Speicher und Speicherbereiche, nämlich der Session Key 13 (Schlüssel), die Berechtigungsdaten 14, der Geldbetragswert im Speicher 16 und der Stack 17 mit den Verrechnungsbelegen, in einem durch ein gestrichelt gezeichnetes Rechteck angedeuteten Überlappungsbereich 100 angeordnet. Durch diesen schematischen Überlappungsbereich 100 soll angedeutet werden, dass die darin angeordneten Datenelemente, respektive die dafür vorgesehenen Speicher und Speicherbereiche, in verschiedenen Ausführungsvarianten des Zugriffskontrollmoduls 12 und/oder des Kostenerfassungsmoduls 18 fest in der Empfangsvorrichtung 1 und/oder auf der Chipkarte 19 ausgeführt sind, die aus der Empfangsvorrichtung 1 entfernt werden kann. Der Vorteil der Speicherung dieser Datenelemente 13, 14, 16, 17 auf der Chipkarte 19 der Empfangsvorrichtung 1 besteht insbesondere darin, dass die Empfangsvorrichtung 1 durch Entfernung der Chipkarte 19 aus der Empfangsvorrichtung 1 für den Zugriff auf zugriffskontrollierte Programme und/oder Daten durch unbefugte Benutzer gesperrt werden kann. Zudem kann ein Benutzer die Chipkarte 19 aus einer ersten Empfangsvorrichtung 1 entfernen, die beispielsweise als mobile (und eventuell tragbare) Empfangsvorrichtung 1 ausgeführt ist, und in eine zweite Empfangsvorrichtung 1 einfügen, die beispielsweise als festinstallierte Empfangsvorrichtung 1 ausgeführt ist. Es soll hier zudem angeführt werden, dass auch das Kostenerfassungsmodul 18 und/oder das Zugriffskontrollmodul 12 auf der Chipkarte 19 ausgeführt werden können, wobei der Fachmann versteht, dass diesbezüglich die Echtzeitanforderungen an das Zugriffskontrollmodul 12 berücksichtigt werden müssen. Die Aufteilung von ausführbaren Funktionen und zu speichernden Datenelementen auf festinstallierte Speicher und Prozessoren in der Empfangsvorrichtung 1, respektive auf Speicher und Prozessoren der aus der Empfangsvorrichtung 1 entfernbaren Chipkarte 19, kann beispielsweise unter Berücksichtigung der Spezifikationen der Mobile Station Application Execution Environment (MExE, GSM 02.57 und GSM 03.57) vorgenommen werden. Mittels geeigneten Synchronisierungsmechanismen können Datenelemente auf der Chipkarte 19 gespeichert und jeweils bei der Einführung der Chipkarte 19 in die Empfangsvorrichtung 1 in festinstallierte Speicherbereiche der Empfangsvorrichtung 1 kopiert werden, wo sie für Echtzeitoperationen zur Verfügung stehen. Veränderte Werte der in den festinstallierten Speicherbereichen gespeicherten Datenelemente können, beispielsweise durch einen parallelen Prozess, auf der Chipkarte 19 aktualisiert werden. Der Fachmann wird verstehen, dass insbesondere vertrauliche Daten, die zwischen Prozessen ausgetauscht werden, die auf mehrere Prozessoren verteilt sind, aus Sicherheitsgründen jeweils gesichert übertragen werden.

Die unverschlüsselten Programme, respektive Daten, können beispielsweise über ein Verarbeitungsmodul 105 und von dort über elektroakustische Wandler 106, respektive Anzeigeeinheiten 107, dem Benutzer der Empfangsvorrichtung 1 wiedergegeben werden. Vor der kostenpflichtigen Wiedergabe an den Benutzer kann durch die Empfangsvorrichtung 1, beispielsweise durch ein entsprechendes Softwaremodul, vom Benutzer optional (beispielsweise eine vom Benutzer konfigurierbare Option) über die Anzeigeeinheit 107 eine entsprechende Bestätigung angefordert werden, beispielsweise unter Angabe der Kosten für den Zugriff auf die betreffenden zugriffskontrollierten Programme und/oder Daten, und die Bestätigung durch den Benutzer über die Eingabeelemente 108 eingegeben werden.

Wie in der Figur 1 schematisch dargestellt ist, umfasst die Empfangsvorrichtung 1 in einer Ausführungsvariante zusätzlich ein Kommunikationsmodul 101 oder kann über eine Geräteschnittstelle mit einem Kommunikationsmodul verbunden werden. Mittels des Kommunikationsmoduls 101 können Daten über das Kommunikationsnetz 4 mit externen Kommunikationseinheiten ausserhalb der Empfangsvorrichtung 1 ausgetauscht werden. Das Kommunikationsnetz 4 ist beispielsweise ein Mobilfunknetz, zum Beispiel ein GSM- oder UMTS-Netz oder ein anderes, beispielsweise satellitenbasiertes Mobilfunknetz, oder ein Festnetz, zum Beispiel ein ISDN-Netz, das öffentliche geschaltete Telefonnetz, ein TV- oder Radio-Kabelnetz, oder ein IP-Netz (Internet Protocol). Insbesondere in Empfangsvorrichtungen 1, die als mobile Vorrichtungen ausgestaltet sind, umfasst das Kommunikationsmodul 101 ein Mobilfunkmodul für die Kommunikation über das Mobilfunknetz 4. Mittels des Kommunikationsmoduls 101 können insbesondere die oben erwähnten Verrechnungsbelege, beispielsweise periodisch oder jeweils beim Erreichen eines vordefinierten Werts des Geldbetragswerts im Speicher 16, an die Verrechnungszentrale 3 übermittelt werden. Zudem kann mittels des Kommunikationsmoduls 101 ein Nachladebetrag über das Kommunikationsnetz 4 entgegengenommen werden, beispielsweise direkt von der Verrechnungszentrale 3, zum Beispiel jeweils zusammen mit der Bestätigung für den Empfang der Verrechnungsbelege, oder von einem Finanzinstitut, wobei beispielsweise vorgängig auch die Solvenz des betreffenden Benutzers überprüft werden kann.

Der im Speicher 16 gespeicherte Geldbetragswert wird durch das Nachlademodul 102 der Empfangsvorrichtung 1 mit dem entgegengenommenen Nachladebetrag nach- oder aufgeladen. Das Nachlademodul 102 ist beispielsweise ein programmiertes Softwaremodul, das auf einem festinstallierten Prozessor der Empfangsvorrichtung 1 oder auf einem Prozessor der Chipkarte 19 der Empfangsvorrichtung 1 ausgeführt wird, oder ein hardwaremässig realisiertes Modul.

An dieser Stelle soll angeführt werden, dass in der Variante, in der die Empfangsvorrichtung 1 mit dem Kommunikationsmodul 101 über einen Rückkanal verfügt, die Verrechnungsbelege ähnlich wie CDR-Belege (Call Data Records) als sogenannte DUR-Belege (DAB/DVB Usage Records) an ein Billing oder Clearing System, beispielsweise in der Verrechnungszentrale 3, übermittelt werden können, und dass die oben beschrieben Kreditkontrolle mittels des gespeicherten Geldbetragswerts sowie die Subtrahierung von zu bezahlenden Kosten von diesem Geldbtragswert nicht unbedingt nötig sind. Mit anderen Worten, wenn die Empfangsvorrichtung 1 mit dem Kommunikationsmodul 101 ausgestattet ist, kann die Kostenverrechnung in einer Variante durch Übermittlung der Verrechnungsbelege mittels des Kommunikationsmoduls 101 an ein Billing oder Clearing System erfolgen, ohne dass in der Empfangsvorrichtung 1 Geldbetragswerte gespeichert, geprüft oder belastet werden müssen.

In einer weiteren Ausführungsvariante umfasst die Empfangsvorrichtung 1 eine Schnittstelle 104, insbesondere eine Geräteschnittstelle, zum Beispiel eine kontaktlose Schnittstelle, beispielsweise eine Infrarotschnittstelle, zum Beispiel eine High Speed Infrared (HSIR)-Schnittstelle oder eine IrDA-Schnittstelle (Infrared Data Association), eine induktive Schnittstelle, zum Beispiel eine Radio Frequency Identification (RFID)-Schnittstelle, eine Home RF (Radio Frequency)-Schnittstelle, eine Digital European Cordless Telecommunications (DECT)-Schnittstelle oder eine andere Cordless Telecommunications System (CTS)-Schnittstelle, oder eine hochfrequente Funkschnittstelle, zum Beispiel eine sogenannte "Bluetooth-Schnittstelle". Über diese Schnittstelle 104 kann die Empfangsvorrichtung 1 Daten mit externen Datenterminals 6 ausserhalb der Empfangsvorrichtung 1 austauschen, die über eine entsprechende Schnittstelle 61 verfügen. Insbesondere können die oben erwähnten Verrechnungsbelege durch das Verrechnungsmodul 103 über die Schnittstelle 104-61 an das Datenterminal 6 übertragen und durch das Datenterminal 6 über ein Kommunikationsnetz 31 an die Verrechnungszentrale 3 geleitet werden. Zudem kann über die Schnittstelle 104-61 ein Nachladebetrag entgegengenommen werden, zum Beispiel jeweils zusammen mit der Bestätigung für den Empfang der Verrechnungsbelege, beispielsweise direkt von der Verrechnungszentrale 3 oder von einer Kontoverwaltungseinheit 7 eines Finanzinstituts, wobei beispielsweise vorgängig auch die Solvenz des betreffenden Benutzers überprüft werden kann. Wie oben erwähnt, kann der im Speicher 16 gespeicherte Geldbetragswert durch das Nachlademodul 102 mit dem entgegengenommen Nachladebetrag nach- oder aufgeladen werden. Das Verrechnungsmodul 103 ist beispielsweise ein programmiertes Softwaremodul, das auf einem Prozessor der Empfangsvorrichtung 1 oder der Chipkarte 19 ausgeführt wird, oder ein hardwaremässig realisiertes Modul.

Falls die Verrechnungsbelege auf der Chipkarte 19 gespeichert werden, können die Verrechnungsbelege durch ein externes Datenterminal 5 ausserhalb der Empfangsvorrichtung 1 gelesen werden, indem die Chipkarte 19, wie in der Figur durch die Chipkarte 19' angedeutet wird, in die Kartenlese-/Schreibvorrichtung 51 des Datenterminals 5 eingeführt wird. Die Verrechnungsbelege können dann durch das Datenterminal 5 über ein Kommunikationsnetz 32 an die Verrechnungszentrale 3 geleitet werden. Falls der Speicher 16 zur Speicherung des Geldbetragswerts auf der Chipkarte 9 integriert ist, kann zudem der Geldbetragswert durch das Nachlademodul 52 des Datenterminals 5 mit einem Nachladebetrag, beispielsweise direkt von der Verrechnungszentrale 3 oder von der Kontoverwaltungseinheit 7 eines Finanzinstituts, auf- oder nachgeladen werden, zum Beispiel jeweils zusammen mit der Bestätigung für den Empfang der Verrechnungsbelege, wobei beispielsweise vorgängig auch die Solvenz des betreffenden Benutzers überprüft werden kann. Nach der Bestätigung des Empfangs der Verrechnungsbelege können die in der Empfangsvorrichtung 1 und/oder auf der Chipkarte 19 gespeicherten Verrechnungsbelege als verrechnet markiert werden. Das Nachlademodul 52 kann als Software- oder Hardwaremodul ausgeführt werden.

Das Datenterminal 6, respektive das Datenterminal 5, ist vorzugsweise ein öffentlich zugängliches Datenterminal, beispielsweise ein Bankautomat, ein Billettautomat oder eine Kassenvorrichtung.

In der Verrechnungszentrale 3 werden Verrechnungsbelege über die Kommunikationsnetze 4, 31 und 32 entgegengenommen und die Authentizität des Absenders, respektive des Produzenten oder der Quelle der Verrechnungsbelege, beispielsweise die Authentizität des Kostenerfassungsmoduls 19, das die Verrechnungsbelege generiert hat, anhand der elektronischen Signatur der Verrechnungsbelege überprüft. Für authentische Verrechnungsbelege werden basierend auf den darin enthaltenen Kostenangaben Gutschriften an die betreffenden, durch die in den Verrechnungsbelegen enthaltenen Anbieteridentifizierungen identifizierten Anbieter gutgeschrieben. Den Anbietem können durch die Verrechnungszentrale 3 über das Kommunikationsnetz 23 Inforrnationen betreffend die eingegangenen Verrechnungsbelege und/oder statistische Informationen betreffend den Zugriff auf zugriffskontrollierte Programme und/oder Daten übermittelt werden. Falls die oben erwähnten Nachladebeträge jeweils direkt durch die Verrechnungszentrale 3 ausgegeben werden und/oder falls Nachladebeträge, die durch Finanzinstitute ausgegeben werden, jeweils der Verrechnungszentrale 3 mitgeteilt und belastet werden, kann in der Verrechnungszentrale 3 die Gesamtsumme der insgesamt oder in einer spezifischen Zeitperiode, beispielsweise ein Monat, ausgegebenen Nachladebeträge und Geldbetragswerte bestimmt werden. Falls in der Verrechnungszentrale 3 festgestellt wird, dass durch die Verrechnungszentrale 3 ausgegebene, respektive verwaltete Geldbetragswerte und Nachladebeträge, innerhalb einer vordefinierten Zeitdauer, beispielsweise ein oder mehrere Jahre, nicht durch über die Kommunikationsnetze 4, 31 und 32 entgegengenommene Verrechnungsbelege verrechnet werden, können diese Geldbetragswerte und Nachladebeträge durch die Verrechnungszentrale 3 basierend auf statistischen Informationen betreffend den Zugriff auf zugriffskontrollierte Programme und/oder Daten an die Anbieter aufgeteilt werden.

Die Verrechnungszentrale 3 umfasst beispielsweise einen oder mehrere Kommunikationsserver sowie eine Datenbank zur Speicherung der ausgegebenen Geldbetragswerte und Nachladebeträge, zur Speicherung der entgegengenommenen Verrechnungsbelege, und zur Speicherung von Informationen betreffend die Anbieter, respektive Betreiber von Broadcastsendern 2, 2'.

Die vorliegende Erfindung eignet sich für die Realisierung von Prepaid- oder Postpaid-Varianten der Verrechnung von zugriffskontrollierten Programmen und/oder Daten, die von Broadcastsendem 2, 2' verbreitet werden. Geldbetragswerte, respektive Nachladebeträge, die nicht im voraus bezahlt werden, dienen bloss als Kreditlimiten, so dass die eigentlichen Kosten für den Zugriff auf unverschlüsselte zugriffskontrollierte Programme und/oder Daten erst nach der Übermittlung der Verrechnungsbelege an die Verrechnungszentrale 3 oder an ein anderes Billing-System dem betreffenden Benutzer, der durch eine in den Verrechnungsbelegen enthaltene Benutzeridentifizierung identifiziert ist, belastet oder in Rechnung gestellt werden kann. Vorausbezahlte Geldbetragswerte, respektive Nachladebeträge, können beispielsweise in Form von anonymen Prepaid-Karten, die in eine von möglicherweise mehreren Karteneinführstellen der Empfangsvorrichtung 1 eingeführt werden können, gegen direkte Bezahlung (bar, Kreditkarte) oder entsprechender Kontobelastung ausgegeben werden. Vorausbezahlte, respektive in Rechnung gestellte Geldbetragswerte, respektive Nachladebeträge, können einem identifizierten Benutzer durch Kontobetastung oder Rechnungsstellung, beispielsweise nach erfolgter Solvenzprüfung, wie oben beschrieben in die Empfangsvorrichtung 1 geladen werden.

### Liste der Bezugszeichen

- 1: Empfangsvorrichtung
- 2, 2': Broadcastsender (Anbieter)
- 3: Verrechnungszentrale
- 4: Kommunikationsnetz (Mobilfunknetz)
- 5, 6: Datenterminal
- 7: Kontoverwaltungseinheit
- 11: Broadcastempfänger
- 12: Zugriffskontrollmodul
- 13: Schlüssel
- 14: Berechtigungsdaten
- 15: Entschlüsselungsmodul
- 16: Datenspeicher mit Geldbetragswert
- 17: Stack mit Verrechnungsbelegen
- 18: Kostenerfassungsmodul
- 19, 19': Chipkarte
- 21: Broadcastsendeantenne
- 22: Broadcastkabelnetz
- 23: Kommunikationsnetz
- 24: Luftschnittstelle
- 31: Kommunikationsnetz
- 32: Kommunikationsnetz
- 51: Kartenlese-/Schreibvorrichtung
- 52: Nachlademodul
- 61: Schnittstelle
- 100: Überlappungsbereich
- 101: Kommunikationsmodul
- 102: Nachlademodul
- 103: Verrechnungsmodul
- 104: Schnittstelle
- 105: Verarbeitungsmodul
- 106: Elektroakustischer Wandler
- 107: Anzeigeeinheit
- 108: Eingabeelemente
- 121: Kreditkontrollmodul

## Patentansprüche

1. Verfahren für die Verrechnung von zugriffskontrollierten Programmen und/oder Daten, die verschlüsselt und unidirektional von einem Broadcastsender (2, 2') verbreitet worden, **dadurch gekennzeichnet,**
**dass** die zugriffskontrollierten Programme und/oder Daten von mindestens einer mobilen Empfangsvorrichtung (1) empfangen werden, wobei die verschlüsselt verbreiteten zugriffskontrollierten Programme und/oder Daten in der mobilen Empfangsvorrichtung (1) entschlüsselt werden, wenn empfangene Zugriffsbedingungsdaten der zugriffskontrollierten Programme und/oder Daten mit in der mobilen Empfangsvorrichtung (1) gespeicherten Berechtigungsdaten (14) übereinstimmen,
**dass** ein Geldbetragswert in einem Datenspeicher (16) der mobilen Empfangsvorrichtung (1) gespeichert wird,
**dass** in der mobilen Empfangsvorrichtung (1) basierend auf empfangenen Kostendaten der zugriffskontrollierten Programme und/oder Daten Kosten für den Zugriff auf die zugriffskontrollierten Programme und/oder Daten bestimmt werden,
**dass** die Entschlüsselung der zugriffskontrollierten Programme und/oder Daten in der mobilen Empfangsvorrichtung (1) verhindert wird, wenn die bestimmten Kosten grösser als der gespeicherte Geldbetragswert sind,
**dass** die Kosten für den Zugriff auf die unverschlüsselten zugriffskontrollierten Programme und/oder Daten vom gespeicherten Geldbetragswert subtrahiert werden,
**dass** in der mobilen Empfangsvorrichtung (1) Verrechnungsbelege, die Kostenbeträge und/oder Kostenparameter für die Berechnung der Kostenbeträge der Kosten für den Zugriff auf die unverschlüsselten zugriffskontrollierten Programme und/oder Daten sowie eine Anbieteridentifizierung des Anbieters dieser zugriffskontrollierten Programme und/oder Daten umfassen, generiert und in einem Datenspeicher (17) der mobilen Empfangsvorrichtung (1) gespeichert werden,
**dass** die generierten Verrechnungsbelege über ein Mobilfunknetz (4) an eine Verrechnungszentrale (3) übermittelt werden, und
**dass** die Verrechnungszentrale (3) entsprechend den empfangenen Verrechnungsbelegen den betreffenden Anbietern Gutschriften gutschreibt.

2. Verfahren gemäss Anspruch 1, **dadurch gekennzeichnet, dass** der genannte Geldbetragswert und/oder die Verrechnungsbelege in einem Datenspeicher (16, 17) gespeichert werden, der in einer Chipkarte (19) integriert ist, die aus der mobilen Empfangsvorrichtung (1) entfembar ist.

3. Verfahren gemäss Anspruch 2, **dadurch gekennzeichnet, dass** die Chipkarte (19) aus der mobilen Empfangsvorrichtung (1) entnommen und in ein externes Datenterminal (5) ausserhalb der mobilen Empfangsvorrichtung (1) eingeführt wird, und dass der genannte Geldbetragswert durch das Datenterminal (5) mit einem Nachladebetrag nach- oder aufgeladen wird.

4. Verfahren gemäss Anspruch 1, **dadurch gekennzeichnet, dass** der genannte Geldbetragswert Ober das Mobilfunknetz (4) mit dem Nachladebetrag nach- oder aufgeladen wird.

5. Verfahren gemäss Anspruch 1, **dadurch gekennzeichnet, dass** durch die mobile Empfangsvorrichtung (1) ein Nachladebetrag von einem externen Datenterminal (6) ausserhalb der mobilen Empfangsvorrichtung (1) über eine Schnittstelle (104-61) entgegengenommen wird, und dass der genannte Geldbetragswert mit dem entgegengenommenen Nachladebetrag nach- oder aufgeladen wird.

6. Verfahren gemäss einem der Ansprüche 1 bis 5, **dadurch gekennzeichnet, dass** die Programme digitale Audio- und/oder Videoprogramme umfassen.

7. Kommunikationssystem umfassend mindestens einen Broadcastsender (2, 2'), der Programme und/oder Daten unidirektional verbreitet, sowie mindestens eine mobile Empfangsvorrichtung (1) mit einem Broadcastempfänger (11) für den Empfang der verbreiteten Programme und/oder Daten, **dadurch gekennzeichnet,**
**dass** die mobile Empfangsvorrichtung (1) ein Zugriffskontrollmodul (105) umfasst, das so beschaffen ist, dass es die Entschlüsselung der verschlüsselt verbreiteten, zugriffskontrollierten Programme und/oder Daten freigibt, wenn entsprechende, empfangene Zugriffsbedingungsdaten mit in der mobilen Empfangsvorrichtung (1) gespeicherten Berechtigungsdaten (14) übereinstimmen, wobei die mobile Empfangsvorrichtung (1) ein Entschlüsselungsmodul (102) zur Entschlüsselung der Programme und/oder Daten umfasst,
**dass** die mobile Empfangsvorrichtung (1) einen Datenspeicher (16) umfasst, in dem ein Geldbetragswert gespeichert ist,
**dass** die mobile Empfangsvorrichtung (1) ein Kostenerfassungsmodul (18) umfasst, das so beschaffen ist, dass es basierend auf empfangenen Kostendaten der zugriffskontrollierten Programme und/oder Daten Kosten für den Zugriff auf die zugriffskontrollierten Programme und/oder Daten bestimmt,
**dass** die mobile Empfangsvorrichtung (1) Mittel (121) umfasst, um die Entschlüsselung der zugriffskontrollierten Programme und/oder Daten zu verhindern, wenn die bestimmten Kosten grösser als der gespeicherte Geldbetragswert sind,
**dass** das Kostenerfassungsmodul (18) so beschaffen ist, dass es die Kosten für den Zugriff auf die unverschlüsselten zugriffskontrollierten Programme und/oder Daten vom gespeicherten Geldbetragswert subtrahiert,
**dass** das Kostenerfassungsmodul (18) so beschaffen ist, dass es Verrechnungsbelege, die Kostenbeträge und/oder Kostenparameter für die Berechnung der Kostenbeträge der Kosten für den Zugriff auf die unverschlüsselten zugriffskontrollierten Programme und/oder Daten sowie eine Anbieteridentifizierung des Anbieters dieser zugriffskontrollierten Programme und/oder Daten umfassen, generiert und in einem Datenspeicher (17) der mobilen Empfangsvorrichtung (1) speichert,
**dass** die mobile Empfangsvorrichtung (1) ein Kommunikationsmodul (101) mit einem Mobilfunkmodul umfasst, das so beschaffen ist, dass es die generierten Verrechnungsbelege über ein Mobilfunknetz (4) an eine Verrechnungszentrale (3) übermittelt, und
**dass** die Verrechnungszentrale (3) so beschaffen ist, dass sie entsprechend den empfangenen Verrechnungsbelegen den betreffenden Anbietern Gutschriften gutschreibt.

8. Kommunikationssystem gemäss Anspruch 7, **dadurch gekennzeichnet, dass** der Datenspeicher (16), in dem der genannte Geldbetragswert gespeichert ist, und/oder der Datenspeicher (17), in dem die Verrechnungsbelege gespeichert sind, in einer Chipkarte (19) integriert sind, die aus der mobilen Empfangsvorrichtung (1) entfernbar ist.

9. Kommunikationssystem gemäss Anspruch 8, **dadurch gekennzeichnet, dass** das Kommunikationssystem mindestens ein externes Datenterminal (5) ausserhalb der mobilen Empfangsvorrichtung (1) umfasst, welches Datenterminal (5) eine Karteniese-/Schreibvorrichtung (51) umfasst, in die die Chipkarte (19, 19') einführbar ist, und welches Datenterminal (5) ein Nachlademodul (52) umfasst, das so beschaffen ist, dass es den genannten Geldbetragswert mit einem Nachladebetrag nach- oder auflädt.

10. Kommunikationssystem gemäss Anspruch 7, **dadurch gekennzeichnet, dass** das Kommunikationsmodul (101) so beschaffen ist, dass es einen Nachladebetrag Ober das Mobilfunknetz (4) entgegennimmt, und dass die mobile Empfangsvorrichtung (1) ein Nachlademodul (102) umfasst, das so beschaffen ist, dass es den genannten Geldbetragswert mit dem entgegengenommenen Nachladebetrag nach- oder auflädt.

11. Kommunikationssystem gemäss Anspruch 7, **dadurch gekennzeichnet, dass** das Kommunikationssystem mindestens ein externes Datenterminal (6) ausserhalb der mobilen Empfangsvorrichtung (1) umfasst, dass die mobile Empfangsvorrichtung (1) eine Schnittstelle (104) für den Datenaustausch mit dem externen Datenterminal (6) umfasst, und dass die mobile Empfangsvorrichtung (1) ein Nachlademodul (102) umfasst, welches so beschaffen ist, dass es vom Datenterminal (6) einen Nachladebetrag Ober die Schnittstelle (104) entgegennimmt und den genannten Geldbetragswert mit dem entgegengenommenen Nachladebetrag nach- oder auflädt.

12. Kommunikationssystem gemäss einem der Ansprüche 7 bis 11, **dadurch gekennzeichnet, dass** die Programme digitale Audio- und/oder Videoprogramme umfassen.

13. Mobile Empfangsvorrichtung (1) umfassend einen Broadcastempfänger (11) für den Empfang von Programmen und/oder Daten, die unidirektional von einem Broadcastsender (2, 2') verbreitet werden, **dadurch gekennzeichnet,**
**dass** die mobile Empfangsvorrichtung (1) ein Zugriffskontrollmodul (12) umfasst, das so beschaffen ist, dass es die Entschlüsselung der verschlüsselt verbreiteten, zugriffskontrollierten Programme und/oder Daten freigibt, wenn entsprechende, empfangene Zugriffsbedingungsdaten mit in der mobilen Empfangsvorrichtung (1) gespeicherten Berechtigungsdaten (14) übereinstimmen, wobei die mobile Empfangsvorrichtung (10) ein Entschlüsselungsmodul (15) zur Entschlüsselung der Programme und/oder Daten umfasst,
**dass** die mobile Empfangsvorrichtung (1) einen Datenspeicher (16) umfasst, in dem ein Geldbetragswert gespeichert ist,
**dass** die mobile Empfangsvorrichtung (1) ein Kostenerfassungsmodul (18) umfasst, das so beschaffen ist, dass es basierend auf empfangenen Kostendaten der zugriffskontrollierten Programme und/oder Daten Kosten für den Zugriff auf die zugriffskontrollierten Programme und/oder Daten bestimmt,
**dass** die mobile Empfangsvorrichtung (1) Mittel (121) umfasst, um die Entschlüsselung der zugriffskontrollierten Programme und/oder Daten zu verhindern, wenn die bestimmten Kosten grösser als der gespeicherte Geldbetragswert sind,
**dass** das Kostenerfassungsmodul (18) so beschaffen ist, dass es die Kosten für den Zugriff auf die unverschlüsselten zugriffskontrollierten Programme und/oder Daten vom gespeicherten Geldbetragswert subtrahiert,
**dass** das Kostenerfassungsmodul (18) so beschaffen ist, dass es Verrechnungsbelege, die Kostenbeträge und/oder Kostenparameter für die Berechnung der Kostenbeträge der Kosten für den Zugriff auf die unverschlüsselten zugriffskontrollierten Programme und/oder Daten sowie eine Anbieteridentifizierung des Anbieters dieser zugriffskontrollierten Programme und/oder Daten umfassen, generiert und in einem Datenspeicher (17) der mobllen Empfangsvorrichtung (1) speichert, und
**dass** die mobile Empfangsvorrichtung (1) ein Kommunikationsmodul (101) mit einem Mobilfunkmodul umfasst, das so beschaffen ist, dass es die generierten Verrechnungsbelege Ober ein Mobitfunknetz (4) an eine Verrechnungszentrale (3) übermittelt.

14. Mobile Empfangsvorrichtung (1) gemäss Anspruch 13, **dadurch gekennzeichnet, dass** der Datenspeicher (16), in dem der genannte Geldbetragswert gespeichert ist, und/oder der Datenspeicher (17), in dem die Verrechnungsbelege gespeichert sind, in einer Chipkarte (19) integriert sind, die aus der mobilen Empfangsvorrichtung (1) entfernbar ist.

15. Mobile Empfangsvorrichtung (1) gemäss Anspruch 13, **dadurch gekennzeichnet, dass** das Kommunikationsmodul (101) so beschaffen ist, dass es einen Nachladebetrag Ober das Mobilfunknetz (4) entgegennimmt, und dass die mobile Empfangsvorrichtung (1) ein Nachlademodul (102) umfasst, das den genannten Geldbetragswert mit dem entgegengenommenen Nachladebetrag nach- oder auflädt.

16. Mobile Empfangsvorrichtung (1) gemäss Anspruch 13, **dadurch gekennzeichnet, dass** sie eine Schnittstelle (104) für den Datenaustausch mit einem externen Datenterminal (6) ausserhalb der mobilen Empfangsvorrichtung (1) umfasst, dass die mobile Empfangsvorrichtung (1) ein Nachlademodul (102) umfasst, welches so beschaffen ist, dass es vom Datenterminal (6) einen Nachladebetrag über die Schnittstelle (104) entgegennimmt und den genannten Geldbetragswert mit dem entgegengenommenen Nachladebetrag nach- oder auflädt.

17. Mobile Empfangsvorrichtung (1) gemäss einem der Ansprüche 13 bis 16, **dadurch gekennzeichnet, dass** die Programme digitale Audiound/oder Videoprogramme umfassen.

## Claims

1. A method for billing of access-controlled programs and/or data which are encrypted and broadcast unidirectionally by a broadcast transmitter (2, 2'), **characterized in that**,
the access-controlled programs and/or data are received by at least one mobile receiving device (1), the encrypted broadcast access-controlled programs and/or data being decrypted in the receiving device (1) for access to access-controlled programs and/or data by a user of the receiving device (1) if received access conditions data for the access-controlled programs and/or data coincide with authorisation data (14) stored in the mobile receiving device (1), and **in that**
- a monetary value is stored in a data memory (16) of the mobile receiving device (1),
- costs for access to the access-controlled programs and/or data are determined in the mobile receiving device (1) based on received cost data for the access-controlled programs and/or data,
- the decryption of the access-controlled programs and/or data in the receiving device (1) is prevented if the determined costs are greater than the stored monetary value, and
- the costs for access to the unencrypted access-controlled programs and/or data are deducted from the stored monetary value,
- billing records are generated in the mobile receiving device (1) and stored in a data memory (17) of the receiving device (1), which billing records comprise the cost amounts and/or cost parameters for calculation of the cost amounts for the access to the unencrypted access-controlled programs and/or data as well as an identification of the vendor of these access-controlled programs and/or data,
- the generated billing records are transmitted to the billing center (3) via a mobile radio network (4), and
- the billing center (3) credits credit items to the respective vendors in accordance with the received billing records.

2. The method according to claim 1, wherein said monetary value and/or the billing records are stored in a data memory (16, 17) that is integrated into a chip card (19) which is removable from the mobile receiving device (1).

3. The method according to the preceding claim, wherein the chip card (19) is removed from the mobile receiving device (1) and inserted in an external data terminal (5) outside the mobile receiving device (1), and said monetary value is reloaded or loaded with a reload amount by the data terminal (5).

4. The method according to the claim 1, wherein said monetary value is reloaded or loaded with the reload amount via the mobile radio network (4).

5. The method according to claim 4, wherein a reload amount is received by the mobile receiving device (1) from the external data terminal (6) via the interface (104-61), and said monetary value is reloaded or loaded with the received reload amount.

6. The method according to one of the claims 1 to 5, wherein the programs comprise digital audio and/or video programs.

7. A communications system comprising at least one broadcast transmitter (2, 2'), which broadcasts programs and/or data unidirectionally, as well as at least one receiving device (1) with a broadcast receiver (11) for receiving the broadcast programs and/or data, **characterized in that**
- the mobile receiving device (1) comprising an access control module (12) which is designed in order that, the decryption of encrypted, broadcast, access-controlled programs and/or data is allowed when the access conditions data coincide with authorisation data (14) stored in the mobile receiving device (1),
- the mobile receiving device (1) comprise a decryption module (15) for decrypting the programs and/or data access-controlled programs and/or data,
- the mobile receiving device (1) comprises a data memory (16) in which a monetary value is stored,
- the receiving device (1) comprises a costs recording module (18) which determines costs for access to the access-controlled programs and/or data based on received cost data for the access-controlled programs and/or data,
- the receiving device (1) comprises means (121) of preventing the decryption of the access-controlled programs and/or data if the determined costs are greater than the stored monetary value, and
- the costs recording module (18) is set up in such a way that it deducts the costs for access to the unencrypted access-controlled programs and/or data from the stored monetary value,
- the costs recording module (18) is set up in such a way that it generates electronically signed billing records and stores them in a data memory (17) of the receiving device (1), which billing records comprise the cost amounts and/or cost parameters for calculation of the cost amounts for the access to the unencrypted access-controlled programs and/or data as well as an identification of the vendor of these access-controlled programs and/or data,
- the receiving device (1) comprises a communications module (101) which transmits the generated billing records to the billing center (3) via a communications network (4),
- and the billing center (3) is set up in such a way that it credits credit items to the respective vendors in accordance with the received billing records.

8. The communications system according to claim 7, wherein the data memory (16) in which said monetary value is stored, and/or the data memory (17), in which the billing records are stored, is or are integrated in a chip card (19) which is removable from the mobile receiving device (1).

9. The communications system according to the claim 8, wherein the communications system comprises at least one external data terminal (5) outside the mobile receiving device (1), which data terminal (5) comprises a card reading/writing device (51) into which the chip card (19, 19') is insertable, and which data terminal (5) comprises a reload module (52), which set up in such a way that it reloads or loads said monetary value with a reload value.

10. Communications system according to claim 7, wherein the communications module (101) is set up in such a way that it receives a reload amount via the mobile telecommunication network (4), and the mobile receiving device (1) comprises a reload module (102) that set up in such a way that it loads or reloads said monetary value with the received reload amount.

11. The communications system according to claim 7, wherein the communications system comprises at least one external data terminal (6) outside the mobile receiving device (1), the mobile receiving device (1) comprises an interface (104) for data exchange with the external data terminal (6),and the mobile receiving module (1) comprises a reload module (102) which is set up in such a way that it receives a reload amount from the data terminal (6) via the interface (104) and reloads or loads said monetary value with the received reload value.

12. The communications system according to one of the claims 7 to 11, wherein the programs comprise digital audio and/or video programs.

13. A mobile receiving device (1) comprising a broadcast receiver (11) for receiving programs and/or data which are broadcast unidirectionally by a broadcast transmitter (2, 2'), **characterized in that**, it comprises
- the mobile receiving device (1) comprises an access control module (12) which is set up in a way that it releases the decryption of encrypted broadcast access-controlled programs and/or data if received corresponding access conditions data coincide with authorization data (14) stored in the mobile receiving device (1), as well as a decryption module (15) which decrypts access-controlled programs and/or data,
- the mobile receiving device (1) comprises a data memory (16) in which a monetary value is stored,
- the mobile receiving device (1) comprises a costs recording module (18) which is set up in such a way that it determines costs for access to the access-controlled programs and/or data based on received cost data for the access-controlled programs and/or data,
- the mobile receiving device (1) comprises means (121) of preventing the decryption of the access-controlled programs and/or data if the determined costs are greater than the stored monetary value, and
- the costs recording module (18) is set up in such a way that it deducts the costs for access to the unencrypted access-controlled programs and/or data from the stored monetary value,
- the costs recording module (18) is set up in such a way that it generates electronically signed billing records and stores them in a data memory (17) of the receiving device (1), which billing records comprise the cost amounts and/or cost parameters for calculation of the cost amounts for the access to the unencrypted access-controlled programs and/or data as well as an identification of the vendor of these access-controlled programs and/or data, and
- the mobile receiving device (1) comprises a communications module (101) which transmits the generated billing records to the billing center (3) via a communications network (4).

14. The mobile receiving device (1) according to claim 13, wherein the data memory (16) in which said monetary value is stored, and/or the data memory (17), in which the billing records are stored, is or are integrated in a chip card (19) which is removable from the receiving device (1).

15. The mobile receiving device (1) according to the claim 13, wherein the communications module (101) is set up in such a way that it receives a reload amount via the mobile telecommunications network (4), and the mobile receiving device (1) comprises a reload module (102) that reloads or loads said monetary value with the received reload amount.

16. The mobile receiving device (1) according to the claim 13, wherein the receiving device (1) comprises an interface (104) for data exchange with an external data terminal (6) outside the mobile receiving device (1), the mobile receiving device a reload module (102) which is set up in such a way that it receives a reload amount from the data terminal (6) via the interface (104) and reloads or loads said monetary value with the received reload amount.

17. The mobile receiving device (1) according to one of the claims 13 to 16, wherein the programs comprise digital audio and/or video programs.

## Revendications

1. Procédé pour la facturation de programmes à accès contrôlé et/ou données cryptés et diffusés de manière unidirectionnelle par un émetteur de diffusion (30), **caractérisé en ce**
- **que** les programmes à accès contrôlé et/ou données sont reçus par au moins un dispositif de réception mobile (1 ), les programmes à accès contrôlé et/ou données encryptés diffusés étant décryptés dans le dispositif de réception mobile (1 ), lorsque des données de condition d'accès des programmes à accès contrôlé et/ou données reçues coïncident avec des données d'autorisation stockées dans le dispositif de réception mobile (1 ),
- **qu'**un montant d'une valeur monétaire est stocké dans une mémoire de données 16 du dispositif de réception (1) mobile.
- **que** des coûts pour l'accès aux programmes à accès contrôlés et/ou données sont déterminés dans le dispositif de réception (1) mobile sur la base de données de coût des programmes à accès contrôlés et/ou données reçus,
- **que** la décryption des programmes à accès contrôlés et/ou données est empêchée dans le dispositif de réception (1) mobile lorsque les coûts déterminés sont plus élevés que le montant de la valeur monétaire stocké,
- **que** les coûts pour l'accès aux programmes à accès contrôlés et/ou données décryptés sont soustraits du montant de la valeur monétaire stocké,
- **que** des justificatifs de facturations sont générés dans le dispositif de réception (1) mobile et stockés dans une mémoire (17) de données du dispositif de réception (1) mobile, ces justificatifs de facturation comprenant les montants des coûts et/ou des paramètres de coût pour la facturation des montants des coûts pour l'accès aux programmes à accès contrôlés et/ou données décryptés, ainsi qu'une identification du fournisseur de ces programmes à accès contrôlés et/ou données,
- **que** les justificatifs de facturation générés sont transmis à une centrale de facturation (3) via un réseau radio mobile (4), et
- **que** la centrale de facturation (3) bonifie les fournisseurs concernés de crédits correspondant aux justificatifs de facturation reçus.

2. Procédé selon la revendication 1, **caractérisé en ce que**, lesdits montant de valeur monétaire et/ou justificatifs de facturation sont stockés dans une mémoire de données (16, 17) intégrée dans une carte à puce (19) amovible du dispositif de réception (1) mobile.

3. Procédé selon la revendication 2, **caractérisé en ce que** la carte à puce (19) est retirée du dispositif de réception (1) mobile et insérée dans un terminal de données (5) externe en dehors du dispositif de réception (1) mobile et que ledit montant de valeur monétaire est chargé ou rechargé avec un montant de recharge par le terminal de données (5).

4. Procédé selon la revendication 1, **caractérisé en ce que** ledit montant de valeur monétaire est chargé ou rechargé avec un montant de recharge via le réseau radio mobile (4).

5. Procédé selon la revendication 1, **caractérisé en ce qu'**un montant de recharge est reçu par le dispositif de réception (1) mobile depuis un terminal de données (6) externe en dehors du dispositif de réception (1) mobile via une interface (104-61) et que ledit montant de valeur monétaire est chargé ou rechargé avec le montant de recharge reçu.

6. Procédé selon une des revendications 1 à 5, **caractérisé en ce que** les programmes incluent des programmes numériques audio et/ou vidéo.

7. Système de communication comprenant au moins un émetteur de diffusion (2, 2') qui encrypte et diffuse des programmes et/ou des données de manière unidirectionnelle, ainsi qu'au moins un dispositif de réception mobile (1) avec un récepteur de diffusion (11) pour la réception de programmes diffusés et/ou de données **caractérisé en ce**
- **que** le dispositif de réception (1) mobile comprend un module de contrôle d'accès (105) agencé pour la libération du décryptage des programmes à accès contrôlé et/ou données cryptés diffusés lorsque les données de conditions d'accès correspondantes reçues coïncident avec les données d'autorisation (14) stockées dans le dispositif de réception (1) mobile, ledit dispositif (1) comprenant un module de décryptage (102) pour le décryptage des programmes et/ou des données,
- **que** le dispositif de réception (1) mobile comprend une mémoire de données (16) dans laquelle un montant de valeur monétaire est stocké,
- **que** le dispositif de réception (1) mobile comprend un module de saisie des coûts (18) agencé pour la détermination des coûts d'accès aux programmes à accès contrôlé et/ou données sur la base de données de coût des programmes à accès contrôlé et/ou données reçues,
- **que** le dispositif de réception (1) mobile comprend des moyens (121) pour empêcher la décryption des programmes à accès contrôlé et/ou données lorsque les coûts déterminés sont plus élevés que le montant de la valeur monétaire stocké,
- **que** le dispositif de saisie des coûts (18) est pour la soustraction des coûts d'accès aux programmes à accès contrôlés et/ou données décryptés du montant de la valeur monétaire stocké,
- **que** le dispositif de saisie des coûts (18) est agencé pour la génération et le stockage dans une mémoire (17) de données du dispositif de réception (1) mobile des justificatifs de facturation comprenant les montants des coûts et/ou des paramètres de coût pour la facturation des montants des coûts pour l'accès aux programmes à accès contrôlés et/ou données décryptés, ainsi qu'une identification du fournisseur de ces programmes à accès contrôlés et/ou données,
- **que** le dispositif de réception (1) mobile comprend un module de communication (101) avec un module de radio mobile agencé pour la transmission des justificatifs de facturation générés à une centrale de facturation (3) via un réseau radio mobile (4), et
- **que** la centrale de facturation (3) est agencée pour la bonification des fournisseurs concernés de crédits correspondant aux justificatifs de facturation reçus.

8. Système de communication selon la revendication 7, **caractérisé en ce que** la mémoire de données (16) dans laquelle est stocké ledit montant de valeur monétaire, et/ou la mémoire (17) dans laquelle sont stockés les justificatifs de facturation est intégrée dans une carte à puce (19) amovible du dispositif de réception (1) mobile.

9. Système de communication selon la revendication 8, **caractérisé en ce que** le système de communication comprend au moins un terminal de données (5) externe en dehors du dispositif de réception (1) mobile, ledit terminal (5) comprenant un dispositif de lecture / écriture de carte (51) dans le lequel s'insère la carte à puce (19, 19'), ledit terminal (5) comprenant un module de recharge (52) agencé pour la charge ou la recharge dudit montant de valeur monétaire avec un montant de recharge.

10. Système de communication selon la revendication 8, **caractérisé en ce que** le module de communication (101) est agencé pour la réception d'un montant de recharge via le réseau radio mobile (4), et que le dispositif de réception (1) mobile comprend un module de recharge (102) qui est agencé pour la charge ou la recharge dudit montant de valeur monétaire avec le montant de recharge reçu.

11. Système de communication selon la revendication 7, **caractérisé en ce que** le système de communication comprend au moins un terminal de données (6) externe en dehors du dispositif de réception (1) mobile, que le dispositif de réception (1) mobile comprend une interface (104) pour l'échange de données avec le terminal de données (6) externe, et que le dispositif de réception (1) mobile comprend un module de recharge (102) qui est agencé pour la réception, depuis le terminal de données (6), d'un montant de recharge via l'interface (104), et pour la charge ou la recharge dudit montant de valeur monétaire avec le montant de recharge reçu.

12. Système de communication selon une des revendications 7 à 11, **caractérisé en ce que** les programmes incluent des programmes numériques audio et/ou vidéo.

13. Dispositif de réception mobile (1) comprenant un récepteur de diffusion (11) pour la réception de programmes diffusés et/ou de données qui sont diffusés de manière unidirectionnelle depuis un émetteur de diffusion (2, 2') **caractérisé en ce**
- **que** le dispositif de réception (1) mobile comprend un module de contrôle d'accès (12) agencé pour la libération du décryptage des programmes à accès contrôlé et/ou données cryptés diffusés lorsque les données de conditions d'accès correspondantes reçues coïncident avec les données d'autorisation (14) stockées dans le dispositif de réception (1) mobile, ledit dispositif (1) comprenant un module de décryptage (15) pour le décryptage des programmes et/ou des données,
- **que** le dispositif de réception (1) mobile comprend une mémoire de données (16) dans laquelle un montant de valeur monétaire est stocké,
- **que** le dispositif de réception (1) mobile comprend un module de saisie des coûts (18) agencé pour la détermination des coûts d'accès aux programmes à accès contrôlé et/ou données sur la base de données de coût des programmes à accès contrôlé et/ou données reçues,
- **que** le dispositif de réception (1) mobile comprend des moyens (121) pour empêcher la décryption des programmes à accès contrôlé et/ou données lorsque les coûts déterminés sont plus élevés que le montant de la valeur monétaire stocké,
- **que** le dispositif de saisie des coûts (18) est agencé pour la soustraction des coûts d'accès aux programmes à accès contrôlés et/ou données décryptés du montant de la valeur monétaire stocké,
- **que** le dispositif de saisie des coûts (18) est agencé pour la génération et le stockage dans une mémoire (17) de données du dispositif de réception (1) mobile des justificatifs de facturation comprenant les montants des coûts et/ou des paramètres de coût pour la facturation des montants des coûts pour l'accès aux programmes à accès contrôlés et/ou données décryptés, ainsi qu'une identification du fournisseur de ces programmes à accès contrôlés et/ou données, et
- **que** le dispositif de réception (1) mobile comprend un module de communication (101) avec un module de radio mobile agencé pour la transmission des justificatifs de facturation générés à une centrale de facturation (3) via un réseau radio mobile (4).

14. Dispositif de réception mobile (1) selon la revendication 13, **caractérisé en ce que** la mémoire de données (16) dans laquelle est stocké ledit montant de valeur monétaire, et/ou la mémoire (17) dans laquelle sont stockés les justificatifs de facturation est intégrée dans une carte à puce (19) amovible du dispositif de réception (1) mobile.

15. Dispositif de réception mobile (1) selon la revendication 13, **caractérisé en ce que** le module de communication (101) est agencé pour la réception d'un montant de recharge via le réseau radio mobile (4), et que le dispositif de réception (1) mobile comprend un module de recharge (102) agencé pour la charge ou la recharge dudit montant de valeur monétaire avec le montant de recharge reçu.

16. Dispositif de réception mobile (1) selon la revendication 13, **caractérisé en ce qu'**il comprend une interface (104) pour l'échange de données avec un terminal de données (6) externe en dehors du dispositif de réception (1) mobile, et que le dispositif de réception (1) mobile comprend un module de recharge (102) qui est agencé pour la réception depuis le terminal de données (6) d'un montant de recharge via l'interface (104), et la charge ou la recharge dudit montant de valeur monétaire avec le montant de recharge reçu.

17. Dispositif de réception mobile (1) selon une des revendications 13 à 16, **caractérisé en ce que** les programmes incluent des programmes numériques audio et/ou vidéo.
